# EUROPÄISCHE PATENTSCHRIFT

(11) **EP 1 340 960 B1**
(45) Veröffentlichungstag und Bekanntmachung des Hinweises auf die Patenterteilung: **21.11.2007**
(21) Anmeldenummer: 03001922.8
(22) Anmeldetag: 30.01.2003
(51) Int. Cl.: G01C 9/26

(54) **Wasserwaage**
Spirit level
Niveau à bulle

(30) Priorität: 01.03.2002 DE 20203233 U
(43) Veröffentlichungstag der Anmeldung: 03.09.2003
(73) Patentinhaber: Stabila-Messgeräte Gustav Ullrich GmbH, 76855 Annweiler am Trifels (DE)
(72) Erfinder: Kallabis, Gabriel, Dipl.-Ing.FH, 76848 Spirkelbach (DE); Schaefer, Wolfgang, Dipl.Phys., 76684 Östringen (DE)
(74) Vertreter: Patentanwälte Möll und Bitterich

(56) Entgegenhaltungen:
- AT-B- 398 846
- GB-A- 2 182 146

## Beschreibung

Die Erfindung bezieht sich auf eine Wasserwaage, bestehend aus einem langgestreckten Körper, vorzugsweise aus Metall, mindestens einer darin eingesetzten Libelle und stirnseitigen Endkappen, vorzugsweise aus Kunststoff, wobei mindestens eine Außenfläche des Körpers eine bevorzugte Messfläche ist und mindestens eine der Endkappen an dem Körper lösbar so befestigt ist, dass die Endkappe wahlweise abnehmbar und wieder anbringbar ist.

Ferner nimmt die Erfindung Bezug auf ein Verfahren zum Übertragen eines Strichs oder Anrisses auf eine Ecke begrenzenden ersten und zweiten Wänden unter Verwendung einer Wasserwaage bestehend aus einem langgestreckten Körper, vorzugsweise aus Metall, mindestens einer darin eingesetzten Libelle und stirnseitigen Endkappen, wobei mindestens eine Außenfläche des Körpers eine bevorzugte Messfläche ist.

Wasserwaagen werden seit Jahrzehnten weltweit in großen Stückzahlen hergestellt und vor allem im Bauwesen regelmäßig eingesetzt. Der Körper einer Wasserwaage besteht aus Gründen der Festigkeit und Maßhaltigkeit in der Regel aus Metall, meist aus Leichtmetall, und hat üblicherweise einen rechteckigen Hohl- oder I-förmigen Massivquerschnitt. Um Beschädigungen der Libellen bei Stößen oder beim Herunterfallen zu vermeiden, sind am Wasserwaagenkörper Endkappen angebracht, die aus einem verhältnismäßig weichen, elastischen, stoßdämpfenden Material, meist Kunststoff, bestehen. Bei Wasserwaagen mit einem Hohlprofil als Körper dienen die Endkappen auch als Verschluss.

Eine Wasserwaage mit einer Endkappe aus Kunststoff ist beispielsweise bekannt aus der AT 398 846 B. Diese Wasserwaage besitzt einen Wasserwaagenkörper mit einem I-förmigen Querschnitt. Der Querschnitt der Endkappen ist rechteckig, die Abmessungen sind an die Abmessungen des Wasserwaagenkörpers angepasst. Zur Befestigung der Endkappen sind in den Stirnseiten der Wasserwaagenkörper zwei mehrfach hinterschnittene Sacköffnungen vorgesehen. Die Endkappen sind mit entsprechenden Laschen ausgerüstet, die formschlüssig in die Sacköffnungen passen. Auf diese Weise sind die Endkappen unlösbar am Wasserwaagenkörper befestigt.

Bei der Herstellung von Wasserwaagen ist die Tendenz zu beobachten, die Stoßdämpfer an den Endkappen immer größer zu gestalten, um einen besseren Schutz vor Beschädigungen zu erreichen. Endkappen, die als Spritzgusstell hergestellt werden, weisen jedoch Fertigungstoleranzen auf und besitzen auch einen anderen Temperaturausdehnungskoeffizienten als der Wasserwaagenkörper. Um ein Überstehen der Endkappen über die Messflächen der Wasserwaage zu verhindern, werden die Endkappen mit geringeren Querschnittsabmessungen hergestellt als der Wasserwaagenkörper; zudem sind diese Endkappen auch aus ästhetischen Gründen oft schwach konisch nach außen abgeschrägt. Die geringeren Querschnittsabmessungen führen zu einer störenden Stufe in der Ebene der Messfläche im Stoßbereich zwischen der Endkappe und dem Wasserwaagenkörper.

Dies führt dazu, dass beispielsweise im Eckbereich zweier Wände, wo ein Riss von der einen Wand auf die andere übertragen werden soll, der Riss nicht exakt um die Ecke herumgeführt werden kann, weil gerade wegen der stirnseitig angeordneten Endkappe die Messfläche der Wasserwaage nicht bis in die Ecke hineingeführt werden kann. Dabei ist der Abschnitt mit fehlendem Riss um so länger, je wirksamer die Stoßdämpfung der Endkappe ist. Die Folge sind Ungenauigkeiten.

Viele Handwerker lösen dieses Problem, indem sie die Endkappe unter Aufbringung entsprechender Gewalt abziehen. Da die Endkappen aber nicht für eine derartige Verwendung konzipiert sind, finden sie bei erneutem Einstecken in den Wasserwaagenkörper keinen Halt mehr, sondern lösen sich und gehen verloren. Das ist unbefriedigend.

Aus der GB-A-2 182 146 ist eine Wasserwaage der eingangs genannten Art bekannt. Die in der Wasserwaage vorhandenen Libellen sind mittels Lampen beleuchtbar. Zum An- und Ausschalten der Lampen befindet sich in einer Stirnfläche des Wasserwaagenkörpers ein Schalter. Die gegenüberliegende Stirnseite ist mittels einer Endkappe verschließbar. Um die für die Beleuchtung erforderlichen Batterien auszutauschen, muss die entsprechende Endkappe entfernt werden, die mit dem Wasserwaagenkörper mittels Schrauben verbunden ist.

Der vorliegenden Erfindung liegt die Aufgabe zugrunde, eine Wasserwaage der eingangs genannten Art sowie ein Verfahren zur Verfügung zu stellen, mit der bzw. dem problemlos Striche oder Anrisse in einer Raumecke exakt um die Ecke herumgeführt werden können, ohne dass der Stoßschutz darunter leidet.

Erfindungsgemäß wird die Aufgabe durch eine Wasserwaage gelöst, die sich dadurch auszeichnet, dass die Endkappe aus einem plattenförmigen Endteil und einem Schaft besteht, der stirnseitig an den Körper der Wasserwaage ansteckbar ist, und dass Verriegelungsmittel im Bereich des Schafts vorgesehen sind, die in Wirkverbindung mit zumindest einer Wand des Körpers stehen.

Die Aufgabe wird auch durch ein Verfahren gelöst, das sich auszeichnet durch zerstörungsfreies Entfernen zumindest einer der Endkappen von dem Körper der erfindungsgemäßen Wasserwaage ohne Werkzeug, Anlegen des Körpers an die erste Wand bis von der Endkappe befreite Stirnfläche des Körpers an der von der angrenzenden zweiten Wand begrenzten Ecke anliegt, Übertragen des Strichs bzw. Anrisses auf die erste Wand, Anlegen des Körpers an die zweite Wand bis die Stirnfläche des Körpers an der von der angrenzenden ersten Wand begrenzten Ecke anliegt, Übertragen des Strichs bzw. Anrisses auf die zweite Wand, wobei der Körper derart auf die erste und die zweite Wand ausgerichtet wird, dass der Strich bzw. der Anriss von der ersten Wand in den auf der zweiten Wand übergeht, und anschließendes Aufstecken der zumindest einen Endkappe auf den Körper, ebenfalls ohne Werkzeug.

Vorteilhafte Weiterbildungen ergeben sich aus den abhängigen Ansprüchen.

Der Grundgedanke der Erfindung besteht darin, die Verbindung zwischen einer Endkappe und dem Körper der Wasserwaage lösbar auszubilden, so dass die Endkappe wahlweise abnehmbar und wieder anbringbar ist. Dabei muss diese Verbindung einerseits eine ausreichende Kraft aufnehmen können, um ein unbeabsichtigtes Lösen der Endkappe bei Stößen zu verhindern; andererseits aber soll die Endkappe im Bedarfsfall vom Benutzer schnell und leicht zu lösen und natürlich auch wieder anzubringen sein.

Eine bevorzugte Lösung der Erfindung besteht darin, an dem Schaft, mit dem die Endkappe stirnseitig am Körper der Wasserwaage befestigt ist, eine Verriegelungsvorrlchtung in Gestalt eines federnd gelagerten Rastknopfes vorzusehen, der in eine an der entsprechenden Stelle in der Wandung des Körpers der Wasserwaage angeordnete Durchbrechung oder Vertiefung eintaucht. Infolge seiner federnden Befestigung am Schaft lässt sich der Rastknopf bei Aufbringung einer Druckkraft federnd versenken.

Beim Anbringen der Endkappe an den Wasserwaagenkörper wird der Rastknopf versenkt, springt aber dann bei Erreichen der Durchbrechung in der Körperwandung heraus und stellt über seine Außenfläche gegenüber der Wandung der Durchbrechung eine Verriegelung sicher. Durch Eindrücken des Rastknopfes, der sinnvollerweise auf zwei einander gegenüberliegenden Seiten des Wasserwaagenkörpers angeordnet ist, kann die Verriegelung gelöst werden, wodurch ein Abziehen der Endkappe möglich ist.

Während dies eine bevorzugte Lösung ist, die den Vorteil hat, dass zu ihrer Betätigung kein Werkzeug benötigt wird, gibt es auch andere Ausführungen von Verriegelungsmitteln, beispielsweise durch Klemmschrauben oder auch bajonettverschlussartig wirkende Verriegelungsmittel, aber auch durch eine magnetische Festhaltung.

Die Erfindung wird nachstehend anhand der in der Zeichnung dargestellten Ausführungsbeispiele näher erläutert. Es zeigen
- Fig. 1: eine teilweise aufgebrochene Seitenansicht einer ersten erfindungsgemäß ausgebildeten Wasserwaage,
- Fig. 2: eine dazu passende Endkappe,
- Fig. 3: einen Schnitt entlang der Linie III-III in Fig. 1,
- Fig. 4: eine schrägbildliche Darstellung der Endkappe,
- Fig. 5: eine Seitenansicht einer zweiten erfindungsgemäß ausgebildeten Wasserwaage,
- Fig. 6: eine dazu passende Endkappe,
- Fig. 7: einen Schnitt entlang der Linie VII-VII in Fig. 5,
- Fig. 8: einen Schnitt entlang der Linie VIII-VIII in Fig. 5
- Fig. 9: eine Seitenansicht einer dritten erfindungsgemäß ausgebildeten Wasserwaage,
- Fig. 10: eine dazu passende Endkappe und
- Fig. 11: einen Schnitt entlang der Linie XI-XI in Fig. 9.

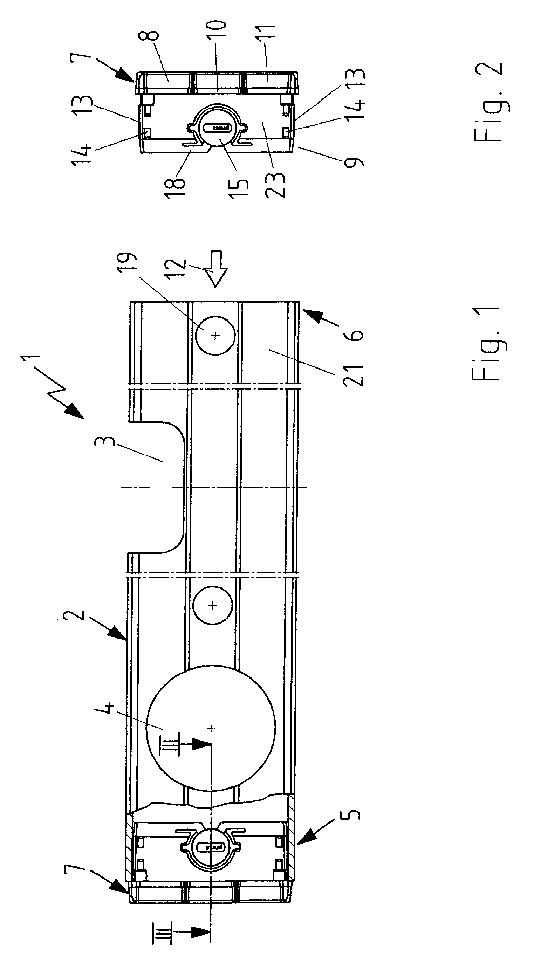

In Fig. 1 ist eine erste Wasserwaage 1 in Seitenansicht dargestellt. Die Wasserwaage 1 besitzt einen langgestreckten Körper 2, der als Hohlprofil aus Metall, insbesondere aus Leichtmetall, ausgebildet ist und in an sich bekannter Weise Ausnehmungen bzw. Durchbrechungen 3 bzw. 4 zum Einsetzen von zueinander senkrecht stehenden Libellen besitzt. Von den an den stirnseitigen Enden 5, 6 angeordneten Endkappen 7 ist diejenige am linken Ende 5 eingesetzt und teilweise geschnitten, diejenige am rechten Ende 6 noch außerhalb des Körpers 2 kurz vor dem Einsetzen als Fig. 2 dargestellt.

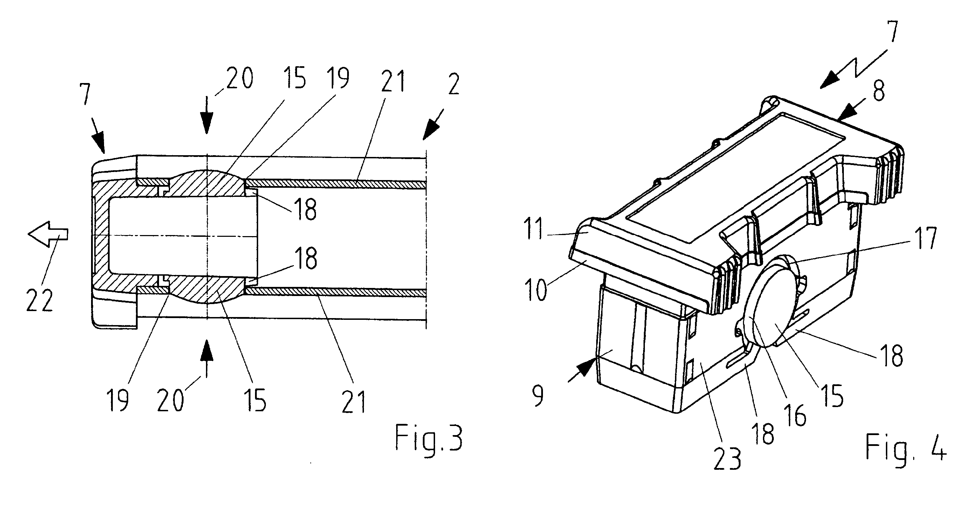

Die in Fig. 2 in Seitenansicht und in Fig. 4 in Schrägansicht dargestellte Endkappe 7 besteht aus einer Endplatte 8, deren Umriss etwa dem Querschnitt des Körpers 2 entspricht und die mit ihrer Dicke über den Körper 2 hinausragt, sowie aus einem mit der Endplatte 8 verbundenen hohlen Schaft 9. Der hohle Schaft 9 besteht mit einem inneren Teil 10 der Endplatte 8 aus einem festeren Kunststoffmaterial höherer Festigkeit, da es die Verbindung der Endkappe 7 mit dem Körper 2 sicherstellen muss, und einem äußeren Teil 11 der Endplatte 8, das aus einem weicheren Kunststoffmaterial besteht und der Stoßdämpfung dient. Die Endkappe 7 kann in an sich bekannter Weise in einem Zweikomponentenspritzgussverfahren hergestellt werden, um eine feste Verbindung dieser Teile 10, 11 sicherzustellen.

Die Außenabmessungen des hohlen Schaftes 9 sind etwas geringer als die Innenabmessungen des Körpers 2, so dass die Endkappe 7 in Richtung des Pfeils 12 in den Hohlraum des Körpers 2 eingeschoben werden kann (Fig. 1). Um etwaige Toleranzen ausgleichen zu können, sind auf den Außenflächen der Wandung des Schaftes 9 Rippen 13, 14 vorgesehen, deren Übermaß beim erstmaligen Einschieben abgetragen werden kann, wobei ein fester Reibschluss entsteht. Weitere Ausgestaltungen der Endkappe 7 ergeben sich aus der Fig. 4.

In der Wandung 23 des Schaftes 9 ist auf gegenüberliegenden Seiten jeweils ein Rastknopf 15 vorgesehen. Die Rastknöpfe 15 haben kreisförmigen Umriss und bilden einen zylindrischen Abschnitt 16, der über die Oberfläche der betreffenden Schaftwandung hinausragt. Jeder Rastknopf 15 liegt in einer Durchbrechung 17 der Wandung 23 des Schaftes 9 und ist mit dieser nur über zwei schmale Stege 18 verbunden. Die Stege 18 sind federnd und tordierbar ausgebildet, so dass der Rastknopf 15 durch Druck auf seine Oberfläche versenkt werden kann und nach Beendigung der Druckausübung seine ursprüngliche Lage wieder einnimmt.

Passend zu den Rastknöpfen 15 sind in der Außenwandung 21 des Wasserwaagenkörpers 2 Durchbrechungen 19 vorgesehen, die im eingesetzten Zustand der Endkappe 7 (Fig. 3) von den einander gegenüberliegenden Rastknöpfen 15 durchsetzt und ausgefüllt werden. Die zylindrische Außenfläche 16 der Rastknöpfe 15 findet dabei eine Anlage am Umfang der Löcher 19, wodurch die Endkappe 7 an einem Lösen aus der Verbindung mit dem Körper 2 der Wasserwaage gehindert wird. Durch Ausüben einer Druckkraft in Richtung der Pfeile 20, die von Daumen und Zeigefinger einer Hand leicht ausgeführt werden kann, lassen sich die Rastknöpfe 15 so weit versenken, dass die Endkappe 7 zerstörungsfrei in Richtung des Pfeils 22 vom Körper 2 der Wasserwaage 1 abgezogen werden kann. Das Wiedereinstecken der Endkappe 7 vollzieht sich in umgekehrter Reihenfolge.

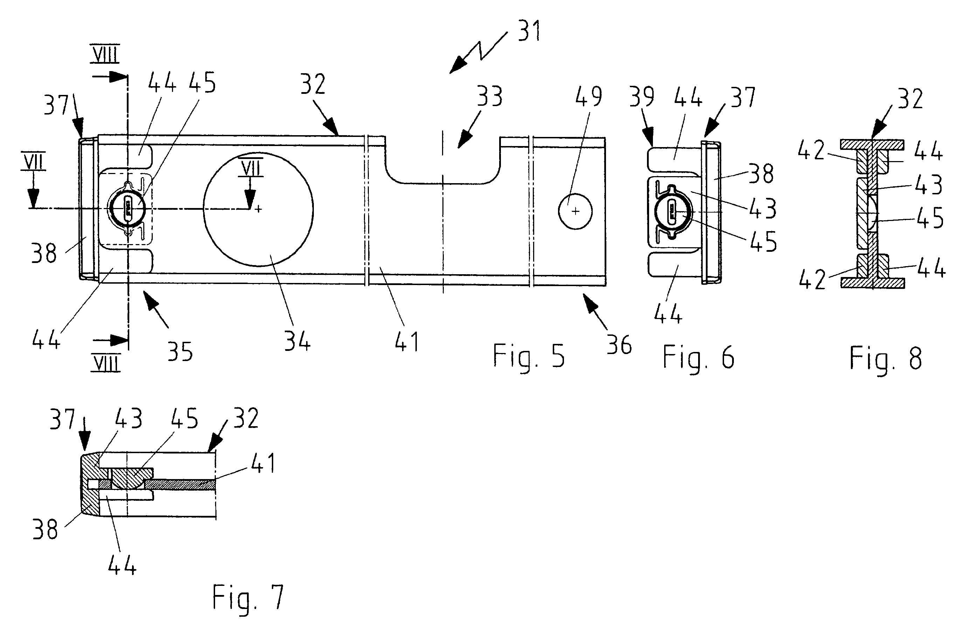

Fig. 5 zeigt eine zweite Wasserwaage 31 in Seitenansicht. Die Wasserwaage 31 besitzt einen langgestreckten Körper 32, der als I-Profil aus Metall, insbesondere Leichtmetall, ausgebildet ist und in an sich bekannter Weise Ausnehmungen bzw. Durchbrechungen 33, 34 zum Einsetzen von zueinander senkrecht stehenden Libellen besitzt. Von den an den stirnseitigen Enden 35, 36 angeordneten Endkappen 37 ist diejenige am linken Ende 35 eingesetzt, diejenige am rechten Ende 36 noch außerhalb des Körpers 32 kurz vor dem Anstecken als Fig. 6 dargestellt.

Die in Fig. 6 in Seitenansicht dargestellte Endkappe 37 besteht aus einer Endplatte 38, deren Umriss etwa dem Querschnitt des Körpers 32 entspricht, sowie aus einem mit der Endplatte 38 verbundenen Schaft 39.

Der Schaft 39 besteht aus zwei Paaren von parallelen, sich gegenüberstehenden Zungen 42, 44. Der Abstand zwischen den Zungenpaaren 42, 44 ist möglichst exakt auf die Dicke der Wandung 41 des Wasserwaagenkörpers 32 abgestimmt. Zwischen den Zungenpaaren 42, 44 ist auf der Seite des Zungenpaares 42 eine federnde Fläche 43 angeordnet, die den federnd versenkbaren Vorsprung 45 trägt. Einzelheiten lassen sich anhand der in den Fig. 7 und 8 dargestellten Schnitte entlang der Linien VII-VII bzw. entlang der Linie VIII-VIII in Fig. 5 gut erkennen.

Zur Verriegelung der Endkappen 37 am Wasserwaagenkörper 32 besitzt dieser zwei Durchbrechungen 49, in die die Vorsprünge 45 einrasten. Zum Lösen der Endkappen 37 drückt der Handwerker mit dem Finger auf den Vorsprung 45 und kann dann die Endkappe 37 abziehen.

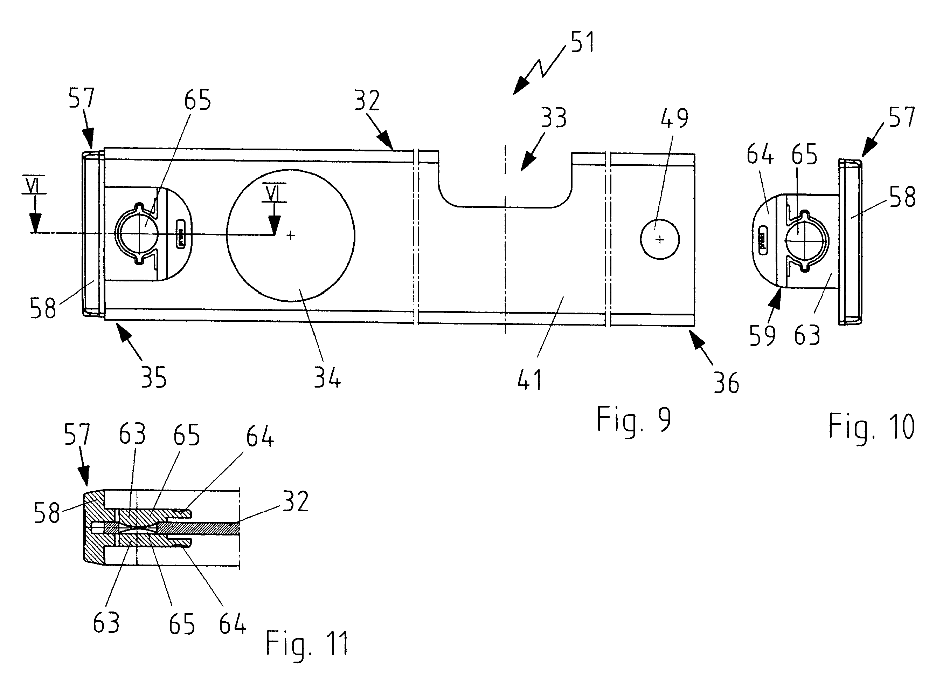

Fig. 9 zeigt eine dritte Wasserwaage 51 in Seitenansicht. Die Wasserwaage 51 besitzt wieder einen langgestreckten Körper 32, der als I-Profil aus Metall, insbesondere Leichtmetall, ausgebildet ist und die Ausnehmungen bzw. Durchbrechungen 33, 34 zum Einsetzen von zu einander senkrecht stehenden Libellen besitzt. Von den an den stirnseitigen Enden 35, 36 angeordneten Endkappen 57 ist diejenige am linken Ende 35 eingesetzt, diejenige am rechten Ende 36 noch außerhalb des Körpers 32 kurz vor dem Einsetzen als Fig. 10 dargestellt.

Die in Fig. 10 in Seitenansicht dargestellte Endkappe 57 besteht aus einer Endplatte 58, deren Umriss etwa dem Querschnitt des Körpers 32 entspricht und die mit ihrer Dicke über den Körper 32 hinausragt, sowie aus einem mit der Endplatte 58 verbundenen Schaft 59.

Der Schaft 59 besteht aus zwei parallelen, federnden Flächen 63, deren gegenseitiger Abstand auf die Dicke der Wand 41 des Wasserwaagenkörper 32 abgestimmt ist. An jeder federnden Fläche 63 ist ein Vorsprung 65 angeformt. Beide Vorsprünge 65 tauchen in die Durchbrechung 49 in der Wand 41 des Wasserwaagenkörpers 32 ein. Dies ist in Fig. 11 gut zu erkennen.

Um die Endkappe 57 vom Wasserwaagenkörper 32 lösen zu können, sind die Enden 64 der federnden Flächen 63 als Betätigungsflächen ausgebildet, wie dies in Fig. 11 dargestellt ist.

## Patentansprüche

1. Wasserwaage (1, 31, 51), bestehend aus einem langgestreckten Körper (2, 32), vorzugsweise aus Metall, mindestens einer darin eingesetzten Libelle und stirnseitigen Endkappen (7, 37, 57), vorzugsweise aus Kunststoff, wobei mindestens eine Außenfläche des Körpers (2, 32) eine bevorzugte Messfläche ist und mindestens eine der Endkappen (7, 37, 57) an dem Körper (2, 32) lösbar so befestigt ist, dass die Endkappe (7, 37, 57) wahlweise abnehmbar und wieder anbringbar ist,
**dadurch gekennzeichnet,**
**dass** die Endkappe (7, 37, 57) aus einem plattenförmigen Endteil (8, 38, 58) und einem Schaft (9, 39, 59) besteht, der stirnseitig an den Körper (2, 32) der Wasserwaage (1) ansteckbar ist, und dass Verriegelungsmittel im Bereich des Schafts (9, 39, 59) vorgesehen sind, die in Wirkverbindung mit zumindest einer Wand (21, 41) des Körpers (2, 32) stehen.

2. Wasserwaage nach Anspruch 1, **dadurch gekennzeichnet, dass** die Verriegelungsmittel die Endkappe (7, 37, 57) gegenüber dem Körper (2, 32) gegen unbeabsichtigtes Lösen kraft- und/oder formschlüssig fixieren.

3. Wasserwaage nach Anspruch 1, **dadurch gekennzeichnet dass** als Verriegelungsmittel an dem Schaft (9, 39, 59) mindestens ein nachgiebig gelagerter Vorsprung (15, 45, 65) vorgesehen ist, der im eingesetzten Zustand in eine Vertiefung (19, 49) In der Wand (21, 41) des Körpers (2, 32) eintaucht.

4. Wasserwaage nach Anspruch 3, **dadurch gekennzeichnet, dass** der Vorsprung (15, 45, 65) knopfartig ausgebildet ist.

5. Wasserwaage nach Anspruch 4, **dadurch gekennzeichnet, dass** der Vorsprung (15, 45, 65) kreisförmigen Umriss aufweist und eine zylindrische Außenfläche (16) besitzt.

6. Wasserwaage nach einem der Ansprüche 1 bis 5, **dadurch gekennzeichnet, dass** der Schaft (9) als Hohlprofil ausgebildet ist.

7. Wasserwaage nach Anspruch 6, **dadurch gekennzeichnet, dass** der Vorsprung (15) in einer Durchbrechung (17) der Wandung des hohlen Schaftes (9) angeordnet sowie Ober Stege (18) mit dem Schaft (9) verbunden ist.

8. Wasserwaage nach Anspruch 6 oder 7, **dadurch gekennzeichnet, dass** der Vorsprung (15) mittels zweier einander fluchtend gegenüberliegender tordierbarer Stege (18) mit dem Schaft (9) verbunden ist.

9. Wasserwaage nach Anspruch 8, **dadurch gekennzeichnet, dass** die Stege (18) dem freien Ende des Schaftes (9) benachbart angeordnet sind.

10. Wasserwaage nach einem der Ansprüche 1 bis 5, **dadurch gekennzeichnet, dass** der Schaft (59) durch zwei parallele, federnde Flächen (63) realisiert ist.

11. Wasserwaage nach Anspruch 10, **dadurch gekennzeichnet, dass** an jeder federnden Fläche (63) ein Vorsprung (65) angeformt ist und dass die Vorsprünge (65) einander zugewandt sind.

12. Wasserwaage nach Anspruch 10 oder 11, **dadurch gekennzeichnet, dass** die freien Enden (64) der federnden Flächen (63) als Betätigungsfläche ausgebildet sind.

13. Wasserwaage nach einem der Ansprüche 1 bis 5, **dadurch gekennzeichnet, dass** der Schaft (39) durch zwei Paare von parallelen Zungen (42, 44) und eine federnde Fläche (43), die den Vorsprung (45) trägt, realisiert ist.

14. Wasserwaage nach einem der Ansprüche 1 bis 13, **dadurch gekennzeichnet, dass** die Endkappe (7, 37, 57) aus zwei Komponenten besteht, nämlich dem Schaft (9, 39, 59) mit dem Vorsprung (15, 45, 65) aus einem Material höherer Festigkeit und einer Endplatte (8, 38, 58) aus einem weicheren, stoßdämpfenden Material.

15. Verfahren zum Übertragen eines Strichs oder Anrisses auf eine Ecke begrenzenden ersten und zweiten Wänden unter Verwendung einer Wasserwaage (1, 31, 51) nach den Patentansprüche 1 bis 14, bestehend aus einem langgestreckten Körper (2, 32), vorzugsweise aus Metall, mindestens einer darin eingesetzten Libelle und stirnseitigen Endkappen (7, 37, 57), wobei mindestens eine Außenfläche des Körpers eine bevorzugte Messfläche ist, **gekennzeichnet durch** die folgenden Schritte: zerstörungsfreies Entfernen zumindest einer der Endkappen (7, 37, 57) von dem Körper (2, 32) der Wasserwaage (1, 31, 51) ohne Werkzeug,
Anlegen des Körpers an die erste Wand bis die von der Endkappe befreite Stirnfläche des Körpers an der von der angrenzenden zweiten Wand begrenzten Ecke anliegt, Übertragen des Strichs bzw. Anrisses auf die erste Wand,
Anlegen des Körpers an die zweite Wand bis die Stirnfläche des Körpers an der von der angrenzenden ersten Wand begrenzten Ecke anliegt,
Übertragen des Strichs bzw. Anrisses auf die zweite Wand,
wobei der Körper derart auf die erste und die zweite Wand ausgerichtet wird, dass der Strich bzw. der Anriss von der ersten Wand In den auf der zweiten Wand übergeht,
und anschließendes Aufstecken der zumindest einen Endkappe auf den Körper ohne Werkzeug.

## Claims

1. A level indicator (1,31,51), comprising an elongate body (2,32), preferably of metal, at least one spirit level inserted therein and end caps (7,37,57) at the end faces, preferably of plastics material, wherein at least one outer surface of the body (2,32) is a preferred measuring surface and at least one of the end caps (7,37,57) is releasably fastened to the body (2,32) in such a way that the end cap (7,37,57) can be optionally removed and re-attached,
**characterised in**
**that** the end cap (7,37,57) comprises a plate-like end part (8,38,58) and a shank (9,39,59) which can be fitted on to the body (2,32) of the level indicator (1) at the end face thereof, and in that locking means are provided in the vicinity of the shank (9,39,59), which are in operative connection with at least one wall (21,41) of the body (2,32).

2. A level indicator according to Claim 1, **characterised in that** the locking means secure the end cap (7,37,57) in a force-locking and/or form-locking manner relative to the body (2,32) against being unintentionally loosened.

3. A level indicator according to Claim 1, **characterised in that** at least one flexibly mounted projection (15,45,65) is provided as locking means on the shank (9,39,59), which projection in the inserted position penetrates into a recess (19,49) in the wall (21,41) of the body (2,32).

4. A level indicator according to Claim 3, **characterised in that** the projection (15,45,65) is of button-like form.

5. A level indicator according to Claim 4, **characterised in that** the projection (15,45,65) is of circular outline and has a cylindrical outer surface (16).

6. A level indicator according to any one of Claims 1 to 5, **characterised in that** the shank (9) is in the form of a hollow profile.

7. A level indicator according to Claim 6, **characterised in that** the projection (15) is arranged in an opening (17) in the wall of the hollow shank (9) and is connected via webs (18) to the shank (9).

8. A level indicator according to Claim 6 or 7, **characterised in that** the projection (15) is connected to the shank (9) by means of two twistable webs (18) aligned opposite one another.

9. A level indicator according to Claim 8, **characterised in that** the webs (18) are arranged adjacent the free end of the shank (9).

10. A level indicator according to any one of Claims 1 to 5, **characterised in that** the shank (59) is formed by two parallel resilient surfaces (63).

11. A level indicator according to Claim 10, **characterised in that** a projection (65) is formed on each resilient surface (63), and **in that** the projections (65) face one another.

12. A level indicator according to Claim 10 or 11, **characterised in that** the free ends (64) of the resilient surfaces (63) are in the form of an actuating surface.

13. A level indicator according to any one of Claims 1 to 5, **characterised in that** the shank (39) is formed by two pairs of parallel tongues (42,44) and a resilient surface (43) which carries the projection (45).

14. A level indicator according to any one of Claims 1 to 13, **characterised in that** the end cap (7,37,57) consists of two components, namely the shank (9,39,59) with the projection (15,45,65) made of a material of higher rigidity and an end plate (8,38,58) made of a softer, shock-absorbing material.

15. A method for transcribing a line or marking on first and second walls bounding a corner using a level indicator (1,31,51) according to Claims 1 to 14, comprising an elongate body (2,32), preferably of metal, at least one spirit level inserted therein and at the end faces end caps (7,37,57), wherein at least one outer surface of the body is a preferred measuring surface, **characterised by** the following steps:
non-destructive removal of at least one of the end caps (7,37,57) from the body (2,32) of the level indicator (1,31,51) without an implement,
applying the body to the first wall until the end face of the body free of the end cap abuts against the corner bounded by the adjacent second wall,
transcribing the line or marking on the first wall,
applying the body to the second wall until the end face of the body abuts against the corner bounded by the adjacent first wall,
transcribing the line or marking on the second wall,
wherein the body is aligned with the first wall and the second wall in such a way that the line or the marking passes from the first wall into that on the second wall,
and subsequent fitting of the at least one end cap on to the body without an implement.

## Revendications

1. Niveau à bulle (1, 31, 51) constitué d'un corps longitudinal (2, 32), de préférence en métal, d'au moins une fiole incorporée dans ledit corps et d'embouts frontaux (7, 37, 57), de préférence en matière plastique, au moins une surface extérieure du corps (2, 32) étant une surface de mesure préférée et au moins l'un des embouts (7, 37, 57) étant fixé sur le corps (2, 32) de manière amovible, de sorte que l'embout (7, 37, 57) puisse être au choix retiré ou replacé,
**caractérisé en ce que**
l'embout (7, 37, 57) comprend une extrémité en forme de plaque (8, 38, 58) et une tige (9, 39, 59) qui est enfichable frontalement sur le corps (2, 32) du niveau à bulle (1), et **en ce que** des moyens de blocage sont prévus dans la région de la tige (9, 39, 59) qui sont en liaison fonctionnelle avec au moins une paroi (21, 41) du corps (2, 32).

2. Niveau à bulle selon la revendication 1, **caractérisé en ce que** les moyens de blocage fixent l'embout (7, 37, 57) faisant face au corps (2, 32) contre un détachement involontaire, par conjugaison de force et/ou de forme.

3. Niveau à bulle selon la revendication 1, **caractérisé en ce qu'**est prévu comme moyen de blocage sur la tige (9, 39, 59), au moins une partie en saillie (15, 45, 65) montée de manière flexible qui à l'état inséré, s'engage dans une cavité (19, 49) de la paroi (21, 41) du corps (2, 32).

4. Niveau à bulle selon la revendication 3, **caractérisé en ce que** la partie en saillie (15, 45, 65) est conformée en bouton.

5. Niveau à bulle selon la revendication 4, **caractérisé en ce que** la partie en saillie (15, 45, 65) comprend un contour circulaire et possède une surface extérieure (16) cylindrique.

6. Niveau à bulle selon les revendications 1 à 5, **caractérisé en ce que** la tige (9) est conformée en profilé creux.

7. Niveau à bulle selon la revendication 6, **caractérisé en ce que** la partie en saillie (15) est disposée dans une découpe (17) de la paroi de la tige creuse (9) et est reliée à la tige (9) par des traverses (18).

8. Niveau à bulle selon la revendication 6 ou 7, **caractérisé en ce que** la partie en saillie (15) est reliée à la tige (9) au moyen de deux traverses (18) se faisant face, alignées entre elles et supportant la torsion.

9. Niveau à bulle selon la revendication 8, **caractérisé en ce que** les traverses (18) sont disposées attenantes à l'extrémité libre de la tige (9).

10. Niveau à bulle selon les revendications 1 à 5, **caractérisé en ce que** la tige (59) est réalisée à l'aide de deux faces (63) parallèles, flexibles.

11. Niveau à bulle selon la revendication 10, **caractérisé en ce que** sur chaque face flexible (63) est formée une partie en saillie (65) et **en ce que** les parties en saillie (65) sont tournées l'une vers l'autre.

12. Niveau à bulle selon la revendication 10 ou 11, **caractérisé en ce que** les extrémités libres (64) des faces flexibles (63) sont conformées en face d'actionnement.

13. Niveau à bulle selon les revendications 1 à 5, **caractérisé en ce que** la tige (39) est réalisée à l'aide de deux paires de languettes parallèles (42, 44) et d'une face flexible (43) qui supporte la partie en saillie (45).

14. Niveau à bulle selon les revendications 1 à 13, **caractérisé en ce que** l'embout (7, 37, 57) est constitué de deux composantes, soit la tige (9, 39, 59) avec la partie en saillie (15, 45, 65) à base d'un matériau d'une solidité élevée et une extrémité (8, 38, 58) à base d'un matériau plus tendre, amortissant les chocs.

15. Procédé pour reporter un trait ou un tracé sur un premier et un second mur délimitant un coin, en utilisant un niveau à bulle (1, 31, 51) selon les revendications 1 à 14, constitué d'un corps longitudinal (2, 32), de préférence en métal, d'au moins une fiole incorporée dans ledit corps et d'embouts frontaux (7, 37, 57), au moins une surface extérieure du corps étant une surface de mesure préférée, **caractérisé en** les étapes suivantes :
retrait non destructif d'au moins l'un des embouts (7, 37, 57) du corps (2, 32) du niveau à bulle (1, 31, 51) sans outil,
application du corps contre le premier mur jusqu'à ce que la face frontale libérée par l'embout du corps s'applique contre le coin délimité par le second mur adjacent,
report du trait ou du tracé sur le premier mur,
application du corps contre le second mur jusqu'à ce que la face frontale du corps s'applique contre le coin limité par le premier mur adjacent,
report du trait ou du tracé sur le second mur,
le corps étant orienté de telle manière sur le premier et le second mur que le trait ou le tracé du premier mur se raccorde à celui du second mur,
et enfichage ultérieur sur le corps, dudit au moins un embout, sans outil.
